Europäisches Patentamt

European Patent Office

Office européen des brevets

(19)

(11) Publication number: **0 034 339**
**B1**

(12) # EUROPEAN PATENT SPECIFICATION

(45) Date of publication of patent specification: **13.06.84**

(51) Int. Cl.³: **H 04 Q 3/00, H 04 M 19/02**

(21) Application number: **81100995.0**

(22) Date of filing: **13.02.81**

(54) **Telephone circuit for off-hook detection during ringing.**

(30) Priority: **19.02.80 IT 6725280**

(43) Date of publication of application:
**26.08.81 Bulletin 81/34**

(45) Publication of the grant of the patent:
**13.06.84 Bulletin 84/24**

(84) Designated Contracting States:
**BE CH DE FR GB LI NL SE**

(56) References cited:
**DE - A - 2 014 950**
**DE - A - 2 901 739**
**FR - A - 2 382 818**
**NL - A - 7 703 293**

**MICROELECTRONICS AND RELIABILITY;**
**VOL:18, NO. 1/2, 1978, London, GB B.**
**MARCLAY: "A PABX model using the 6800**
**MPU", pages 15-33**

(73) Proprietor: **CSELT Centro Studi e Laboratori**
**Telecomunicazioni S.p.A.**
**Via Guglielmo Reiss Romoli, 274**
**I-10148 Turin (IT)**

(72) Inventor: **Melindo, Flavio**
**Via Valgioie, 71**
**Torino (IT)**

(74) Representative: **Riederer Freiherr von Paar zu**
**Schönau, Anton**
**Freyung 615 Postfach 2664**
**D-8300 Landshut (DE)**

Courier Press, Leamington Spa, England.

## Description

The invention relates to a telephone circuit for off-hook detection during ringing as defined in the prior art portion of claim 1.

As from the introduction of electronic line circuits at the telephone exchanges the problem has arisen of sending the call to a subscriber set by means of conventional 25 Hz ringing signals with a rather high voltage. This is due to the fact that these new electronic circuits cannot generally handle such signals, therefore generally one resorts to auxiliary relays, driven at the correct ringing rhythm.

Each auxiliary relay switches the telephone line from the line circuit to the centralized generator of ringing signals. This generator supplies the timed ringing current also to the other auxiliary relays devoted to the lines of subscribers that at that instant are object of a call. This switching entails a number of problems: first, the off-hook operated by the called party in the presence of a ringing signal cannot be detected as usual, as the line circuit is not inserted, and therefore the subscriber could receive also in the speaker of the handset the 25 Hz tone.

This disadvantage can be obviated by the use of a separate circuit able to detect the off-hook in the presence of ringing current and to communicate it to control units, that in this case have two signals to handle, the one coming from the line circuit and the other coming from the separate circuit. Therefore the telephone sets equipped with electronic tone ringers have to be handled differently from those with traditional tone ringers.

It is known (DE—A 2 901 739) to detect the off-hook condition during ringing by evaluating the dc component in the loop current, a tapped current being low-pass filtered and the resulting dc being supplied to a threshold device which upon a certain level of dc originates a respective indication signal. Reaching the threshold, however, by the dc component depends on several influences such as attenuation in the line so that the result seems rather arbitrary.

It is also known (DE—A 2 014 950) to, as stated above, determine the dc component by evaluating the difference between the times of the positive and of the negative partial period of the loop current. In this prior art, the positive time is counted upward and the negative time is counted downward which, if both half periods are equal, uses to result in zero, while upon a dissymmetry, the difference accumulates to a value which finally reaches the threshold for indicating the off-hook condition. This accumulation, however, finally also leads to such indication in case of an only slight dissymmetry resulting from spurious dc even if this is much lower than the dc indicating the off-hook condition. Further, the specifications determining the ringing current frequency allow high tolerances which lead to the consequences that in case of a lower actual frequency, the respective time difference has to be higher, and in case of a higher actual frequency, the respective time difference has to be lower for the assumption of off-hook detection. Such difference, however, can not be taken into account by the prior art.

Thus, the problem is that the off-hook detection should take place by the telephone circuit independently of external interferences and inaccuracies.

This problem is solved by the invention characterized in claim 1 wherein the time difference between the positive and the negative partial period is objectively measured and is then, not being accumulated, related to the actual ringing current frequency.

The telephone circuit of the invention that generates the correct rhythm to energize the relay designed to interconnect the telephone line and the signal generator, detects the off-hook in the presence of a ringing signal on the line and autonomously disactivates said relay for a predetermined time interval. It can detect immediately the off-hook occurred while the ringing signal is present on the line and communicate it to the control units, that will revoke the previous command.

In case noises on the line are detected as off-hook by this telephone circuit, but are not detected as such by the line circuit in the following step, the ringing signal can be sent again after a predetermined time interval.

These and other characteristics of the present invention will become clearer from the following description of a preferred way of embodiment thereof given by way of example and not in a limiting sense, taken in connection with the annexed drawing in which:

— Fig. 1 depicts the connection of a telephone circuit according to the invention to telephone exchange;

— Fig. 2 is the block diagram of the telephone circuit CI;

— Fig. 3 is the block diagram of a logic circuit denoted by CS in Fig. 2.

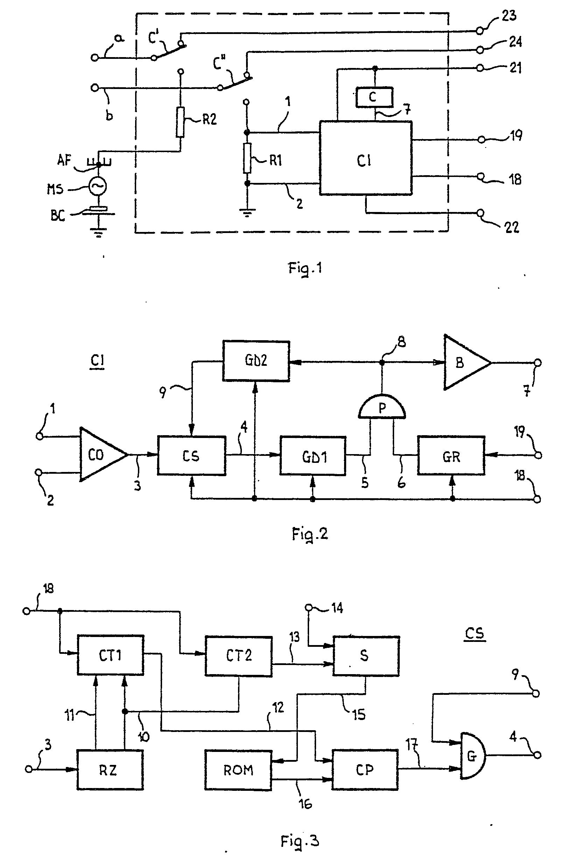

In Fig. 1 reference CI denotes the telephone circuit object of the invention. It receives via wire 19 the commands arriving from the exchange control units and via wire 18 a clock signal, usually at 8 KHz, supplied by a suitable centralized generator or contained in the same circuit CI.

The circuit CI is fed via wires 21 and 22 and receives at the input, connected to wires 1 and 2, the voltage drop present at the terminals of a resistor R1 during the calling step.

In addition CI drives via wire 7 a relay that switches the subscriber line, denoted by a and b, so as to connect it either with the line circuit, connected to wires 23 and 24, or with the generator of ringing signals at 25 Hz, denoted by MS, via resistors R1 and R2. The relay winding is denoted by C, while the relay switching contacts are denoted by C' and C".

The drawing shows also a dc current source BC and a point AF for its connection to other circuits.

When the command of sending a calling signal arrives at wire 19, CI generates a driving signal for relay C, timed according to the normalized rhythm. As a consequence, line a, b is rhythmically connected with signal generator MS through contacts C' and C". When the called party lifts the handset, relay C is either being in released or in operated status. In the first case the line circuit detects the off-hook as usual, in the second case the condition is at first detected by telephone circuit CI. That is effected by means of a comparison between the duration of positive half-waves and the duration of the negative ones of the current that flows through RI in the two states of the hook switch. In fact, when the hook switch is in the on-hook state, only 25 Hz ac current with symmetrical half-periods flows through the line, as dc current generated by BC is stopped by the capacitor inside the telephone set. When the hook switch is in off-hook state, the capacitor is short-circuited and a dc current is superimposed onto the ac current along the line and through R1 and R2.

Thus dc current makes the half-period durations different. By the measurements of the ratios between these durations, telephone circuit CI detects the off-hook and interrupts the energization of relay C.

In Fig. 2 reference CO denotes a comparator, that supplies at the output on wire 3 a signal at logic level 1 or 0, according to the current direction in R1 (Fig. 1), to which it is connected by means of wires 1 and 2. Then at the output there is a sequence of ones and zeros whose duration in time is equal to the duration of positive or negative half-periods.

CS denotes a logic circuit able to measure the ratio between the signal durations at high and low level, coming from CO, and to generate at the output on wire 4 a suitable logic signal when the ratio exceeds a predetermined threshold. It can be enabled or inhibited by the signal present on wire 9. Greater details of this logic circuit will be supplied hereinafter.

References GD1 and GD2 denote two delay generators implemented by instance with monostable logic circuits, that upon receiving an input signal generate at the output a signal of predetermined duration.

Reference GR denotes a rhythm generator that, when control units order it via wire 19 to send the calling signal supplies at the output on wire 6 the ringing rhythm. This rhythm consisting for instance of a one-second pulse followed by a four-second pause, can be generated by a chain of dividers synchronized on the leading edge of the signal on wire 19 and timed by the clock signal present on wire 18.

Reference P denotes a logic multiplier and reference B denotes a power amplifier, able to drive relay C (Fig. 1).

The operation of the telephone circuit, object of the invention, is now examined with reference to Fig. 2.

Under standby conditions on wire 19 there is a logic level 0, at the output of GD1 on wire 5 there is a logic level 1 and at the output of GR on wire 6 there is a logic level 0. When the control units send a signal with logic level 1 onto wire 19, the signal on wire 6 goes immediately to value 1, and then through P and B, relay C connected to wire 7 is energized. The signal on wire 6 is then interrupted by GR according to the predetermined ringing rhythm.

It is clear that the first ringing sound arrives at the called party as soon as the calling party has ended the dialling and the exchange has established the necessary connections.

When the signal on wire 8 goes to logic level 1, delay generator GD2 sends on wire 9 a signal that inhibits circuit CS for a predetermined time, computed from the arrival of the timing signal on wire 18. In this way no check is effected on the duration of the half-periods during the transient of actuation of the relay; in fact, due to the relay bounces, CS could effect false off-hook detections.

When the off-hook is detected, the signal on wire 4 goes to logic level 1 and delay generator GD1 sends via wire 5 to multiplier P a signal at logic level 0, causing the transition to 0 of levels on wires 8 and 7 and so the release of relay C.

The signal generated by GD1 has such a duration that it keeps relay C released for a time sufficient for a reliable off-hook detection by the line circuit and the command revocation by the control units.

If the off-hook detection is false, the line circuit does not communicate it to control units, that then do not revoke the command on wire 19. As a consequence the signal on wire 6 remains at logic level 1 and at the end of the delay time produced by GD1, relay C is excited again and the ringing current is sent onto the line.

Logic circuit, denoted by CS in Fig. 2, is represented in greater details by the block diagram of Fig. 3.

The signal at the input on wire 3 is examined by logic circuit RZ, that emits a signal on wire 10 when the signal at the input goes from logic level 1 to logic level 0 and a signal on wire 11 in the opposite case. References CT1 and CT2 denote an up-down counter and an up counter respectively, having the inputs connected by wire 18 to clock generator. When logic circuit RZ detects a transition from 0 to 1 of the input signal, it sends a signal on wire 11 that resets the contents of CT1 and starts the forward counting.

At the subsequent transition from 1 to 0 detected by RZ, CT1 interrupts the forward counting and starts the backward counting, beginning from the numerical value attained before.

When the signal at the input of logic circuit RZ passes again from level 1 to level 0, counter CT1 has reached a numerical value, available on wires 12 before its resetting, that is a function of the difference between the durations of the half-periods of the ringing current. Such a value is compared in a logic comparator CP with a suitable dynamic threshold value, furnished by a read-only memory ROM on wire 16. According to the result of such a comparison, it is possible to decide whether the ratio between the half-periods of the ringing current is within or beyond the detection range and then the off-hook has occurred.

The numerical value representative of the difference between the durations of the half-periods is correlated with the durations themselves relating it to the entire duration of the ringing current period at 25 Hz.

Anyway this is a univocal correlation only if the reference period is constant, while in the specifications that regulate the ringing current period high tolerances are allowed.

A correlation factor is therefore to be introduced, that takes into account the period variations with respect to its nominal value. Such correction is introduced into the threshold value supplied by memory ROM on wire 16. To this aim, counter CT2 is reset by the signal on wire 10 when RZ detects a transition from logic level 1 to logic level 0, analogously to CT1, and begins counting the pulses present on wire 18. At the subsequent transition from 1 to 0 detected by RZ, CT2 has reached a numerical value proportional to the entire period of the signal at 25 Hz.

A subtracting circuit S receives at the input connected to wire 13 the actual value of the period measured by CT2 and at the input connected to wire 14 a nominal value of the period, stored for instance by a fixed wiring.

At the output on wire 15 there is then present the difference between these values, that is utilized to address the read-only memory ROM. In correspondence with each address ROM supplies on wire 16 the threshold that comparator CP uses for the comparison. The signal supplied by CP is sent via wire 17 to a logic gate G, enabled by the signal present on wire 9 to the transfer towards the output connected to wire 4.

## Claims

1. Telephone circuit for off-hook detection during ringing when the positive half-period of the ringing current has a duration different in a predetermined quantity from the duration of the negative half-period, said telephone circuit controlling an interface between a subscriber telephone line (a, b) and a subscriber line circuit under the supervision of exchange control units and, upon receiving therefrom an order to send a calling signal, generating the wanted ringing rhythm for driving a relay (C) apt to interconnect the telephone line with a ringing current generator (MS) and interrupting it due to off-hook, the detection of the off-hook occurring by the comparison between the duration of the positive parts of the periods and the duration of the negative parts of the periods of the ringing current, deriving a signal for the difference between said durations and comparing it with a threshold value after a predetermined time interval from each switching operation of said relay (C), and once the detection has occurred said relay being released for a predetermined time interval, characterized in that said threshold value is made dependent on the actual duration of the period of the ringing current and is compared with the difference between the positive part duration and the negative part duration of one period.

2. Telephone circuit as in claim 1, comprising a first logic circuit (CS) able to compare the difference between subsequent partial periods having different polarity of the ringing current along the telephone line with the threshold value, characterized in that said first logic circuit (CS) comprises:
— a second logic circuit (RZ) that detects the transition of a binary signal issued by a comparator (CO), the logic levels thereof indicating the polarity of the instantaneous ringing current, at the input from logic level 0 to logic level 1 and vice-versa and emits a binary signal in which each logic level is associated to a kind of transition;
— a first up-down counter (CT1) reset and enabled to a counting direction or to the other one by said second logic circuit (RZ) as a function of the signal transition kind at the input;
— a second up counter (CT2) reset and enabled to the counting by said second logic circuit (RZ) as a function of the occurrence of one of the signal transition kinds at the input;
— a subtracting circuit (S) able to subtract a predetermined quantity from the result of the counting of said second counter (CT2);
— a read-only memory (ROM) addressed by the signal supplied by said subtracting circuit (S) and containing suitable threshold numerical values;
— a second comparator (CP) able to effect the comparison between the result of two different subsequent types of counting of said first counter (CT1) and the content of the addressed area of said read-only memory (ROM).

3. Telephone circuit according to claim 2, characterized in that said first logic circuit (CS), said first counter (CT1) and said second counter (CT2) receive a common clock signal for the timing necessary to their operations.

4. Telephone circuit according to claim 1, characterized in that it comprises:
— a rhythm generator (GR) basically composed of a chain of frequency dividers, that is enabled by the command of sending said calling signal and is synchronized on the leading edge of the command signal;
— a first comparator (CO), able to detect the direction of the ringing current in the telephone line and to supply a binary signal in which a logic level is associated to a direction and the other level to the other direction of the current;

— a first logic circuit (CS), able to compare the ratio between subsequent half-periods of the ringing current along the telephone line with a predetermined threshold, said half-periods being supplied as binary signal by said first comparator (CO);

— a first delay generator (GD1), able to supply a signal having a predetermined duration at the arrival at its input of a signal supplied by said first logic circuit (CS);

— a logic multiplier (P), connected to the outputs of said rhythm generator (GR) and of said first delay generator (GD1);

— a power amplifier (B), connected to the output of said logic multiplier and able to drive said relay (C);

— a second delay generator (GD2), able to supply a signal having a predetermined duration at the arrival on its input of a signal supplied by said logic multiplier (P), in order to inhibit said first logic circuit (CS);

5. Telephone circuit according to claims 3 and 4, characterized in that also said first delay generator (GD1), said second delay generator (GD2) and said rhythm generator (GR) receive the common clock signal.

**Revendications**

1. Circuit téléphonique pour la détection du décrochage pendant la génération de la cadence d'appel lorsque la demi-période positive du courant d'appel a une durée différente pour une quantité prédéterminée de la durée de la demi-période négative, ledit circuit téléphonique commandant une interface entre une ligne téléphonique d'abonné (a, b) et un circuit de ligne d'abonné sous la supervision des unités de commande de central, et dès la réception d'une ordre d'envoi d'un signal d'appel, engendré par ces unités, en générant la cadence requise d'appel pour piloter un relais (c) apte à connecter la ligne téléphonique avec un générateur de courant d'appel (MS) et en l'interrompant à la suite du décrochage, la détection du décrochage étant effectuée sur la base de la comparaison entre la durée des parties positives et des parties négatives des périodes du courant d'appel, en dérivant un signal indiquant la différence entre lesdites durées et en le comparant avec une valeur de seuil après un intervalle de temps prédéterminé dès chaque commutation dudit relais (c), et une fois que la détection a eu lieu, ledit relais revenant à l'état de repos pendant un intervalle de temps prédéterminé, caractérisé en ce que ladite valeur de seuil dépend de la durée réelle de la période du courant d'appel et est comparée avec la différence entre la durée de la partie positive et négative d'une période.

2. Circuit téléphonique selon la revendication 1, comprenant un premier circuit logique (CS) apte à comparer la différence entre des périodes partielles successives de polarité différente du courant d'appel, qui transite le long de la ligne téléphonique, avec la valeur de seuil, caractérisé en ce que ledit premier circuit logique (CS) comprend:

— un deuxième circuit logique (RZ) qui détecte la transition du niveau logique 0 au niveau logique 1 et vice versa d'un signal binaire fourni à l'entrée par un comparateur (CO), ledit niveau logique indiquant la polarité du courant d'appel instantané, et qui en outre émet un signal binaire où chaque niveau logique est associé à un type de transition;

— un premier compteur-décompteur (CT1), remis à zéro et validé dans un sens de comptage ou dans l'autre par ledit deuxième circuit logique (RZ), en fonction du type de transition de niveau du signal à l'entrée;

— un deuxième compteur (CT2), mis à zéro et validé au comptage par ledit deuxième circuit logique (RZ), lorsqu'à son entrée une certaine transition a lieu;

— un circuit de soustraction (S), apte à soustraire un nombre prédéterminé du résultat du comptage dudit deuxième compteur (CT2);

— une mémoire morte (ROM), adressée par le signal délivré par ledit circuit de soustraction (S) et qui contient des valeurs numériques de seuil;

— un deuxième comparateur (CP), apte à effectuer la comparaison entre le résultat du comptage et du décomtage dudit premier compteur (CT1) et le contenu de la zone adressée de ladite mémoire morte (ROM).

3. Circuit téléphonique suivant la revendication 2, caractérisé en ce que ledit premier circuit logique (CS), ledit premier compteur (CT1) et ledit deuxième compteur (CT2) reçoivent un signal common d'horloge pour les rhythmes nécessaires à leur fonctionnement.

4. Circuit téléphonique suivant la revendication 1, caractérisé en ce qu'il comprend:

— un générateur de cadence (GR), essentiellement constitué par une chaîne de diviseurs de fréquence, qui est validé par l'ordre d'envoi du signal d'appel et qui est synchronisé sur le front montant dudit ordre;

— un premier comparateur (CO), apte à détecter le sens du courant d'appel sur la ligne téléphonique, en fournissant un signal binaire dont le niveau logique est associé au sens du courant;

— un premier circuit logique (CS), apte à comparer le rapport entre des demi-périodes successives du courant d'appel sur la ligne téléphonique avec un seuil prédéterminé, lesdites demi-périodes lui étant délivrées comme un signal binaire par ledit premier comparateur (CO);

— un premier générateur de retard (GD1), apte à engendrer un signal du durée prédéterminé lorsqu'il reçoit un signal délivré dudit premier circuit logique (CS);

— un multiplicateur logique (P), relié aux sorties dudit générateur de cadence (GR) et dudit premier générateur de retard (GD1);

— un amplificateur de puissance (B) relié à la sortie dudit multiplicateur logique et apte à piloter ledit relais (C);

— un deuxième générateur de retard (GD2), apte à engendrer un signal de durée prédéterminé lorsqu'il reçoit un signal délivré dudit multiplicateur logique (P), dans le but d'inhiber ledit premier circuit logique (CS).

5. Circuit téléphonique suivant les revendications 3 et 4, caractérisé en ce que aussi ledit premier générateur de retard (GD1), ledit deuxième générateur de retard (GD2) et ledit générateur de cadence (GR), reçoivent le signal commun d'horloge.

**Patentansprüche**

1. Fernsprechschaltung zur Feststellung des Abhebens während des Rufsignals, wenn die positive Halbperiode des Rufsignalstroms eine um ein gegebenes Maß unterschiedliche Dauer gegenüber der Dauer der negativen Halbperiode hat, wobei die Fernsprechschaltung eine Anpassungsschaltung zwischen einer Teilnehmer-Fernsprechleitung (a, b) und einer Teilnehmer-Leitungsschaltung unter der Überwachung von Vermittlungsstellen-Steuereinheiten steuert und bei Empfang eines Befehls von diesen Steuereinheiten zum Senden eines Rufsignals den geforderten Rufsignalrhythmus zur Ansteuerung eines Relais (C) erzeugt, das die Fernsprechleitung mit einem Rufsignalstromgenerator (MS) verbindet und sie beim Abheben von ihm trennt, das durch einen Vergleich zwischen der Dauer der positiven Teile der Perioden und der negativen Teile der Perioden des Rufsignalstroms festgestellt wird, ein Signal für die Differenz zwischen diesen Zeitdauern erzeugt und es nach einer gegebenen Zeitspanne ab jedem Schaltvorgang des Relais (C) mit einem Schwellenwert vergleicht, wobei nach erfolgter Entdeckung des Abhebens das Relais für eine gegebene Zeitspanne entregt wird, dadurch gekennzeichnet, daß der Schwellenwert von der tatsächlichen Dauer der Periode des Rufsignalstroms abhängig gemacht wird und mit der Differenz zwischen der Dauer des positiven Teils und der Dauer des negativen Teils einer Periode verglichen wird.

2. Fernsprechschaltung nach Anspruch 1, mit einer ersten logischen Schaltung (CS), die den Unterschied zwischen aufeinanderfolgenden Teilperioden unterschiedlicher Polarität des Rufsignalstroms entlang der Fernsprechleitung mit dem Schwellenwert vergleicht, dadurch gekennzeichnet, daß diese erste logische Schaltung (CS) folgende Einzelschaltungen umfaßt:

— eine zweite logische Schaltung (RZ), die den Übergang eines an seinem Eingang auftretenden, von einem Komparator (CO) abgegebenen binären Signals, dessen boolesche Pegel die Polarität des derzeitigen Rufsignalstroms anzeigen, vom booleschen Pegel 0 zum booleschen Pegel 1 und umgekehrt erkennt und ein Binärsignal abgibt, in dem jeder boolesche Pegel einer dieser Übergangsarten zugeordnet ist;

— einen ersten Auf- und Ab-Zähler (CT1), der von der zweiten logischen Schaltung (RZ) als Funktion der Art der eingangsseitigen Signalübergangsart zurückgestellt und zur einen Zählrichtung oder zur anderen Zählrichtung eingeschaltet wird;

— einen zweiten, aufwärtszählenden Zähler (CT2), der von der zweiten logischen Schaltung (RZ) als Funktion des eingangsseitigen Auftretens eines der Signalübergangsarten zurückgestellt und zum Zählen angesteuert ist;

— eine Subtraktionsschaltung (S), die vom Zählergebnis des zweiten Zählers (CT2) eine gegebene Menge subtrahieren kann;

— einen Festwertspeicher (ROM), der vom von der Subtraktionsschlatung (S) gelieferten Signal adressiert ist und geeignete numerische Schwellenwerte enthält;

— einen zweiten Komparator (CP), der die Zählergebnisse der unterschiedlichen Zählweisen des ersten Zählers (CT1) und den Inhalt des adressierten Speicherbereichs des Festwertspeichers (ROM) vergleicht.

3. Fernsprechschaltung nach Anspruch 2, dadurch gekennzeichnet, daß die erste logische Schaltung (CS), der erste Zähler (CT1) und der zweite Zähler (CT2) für die zu ihrem Betrieb erforderliche Zeitsteuerung ein gemeinsames Taktsignal empfangen.

4. Fernsprechschaltung nach Anspruch 1, dadurch gekennzeichnet, daß sie folgende Einzelschaltungen umfaßt:

— einen Rhythmusgenerator (GR), der im wesentlichen aus einer Kette von Frequenzteilern besteht, durch den Befehl zum Senden des Rufsignals in Gang gesetzt wird und mit der Anfangsflanke des Befehlssignals synchronisiert ist;

— einen ersten Komparator (CO), der die Stromrichtung des Rufsignalstroms in der Fernsprechleitung feststellt und ein Binärsignal liefert, dessen einer boolescher Wert der einen Stromrichtung und dessen anderer boolescher Wert der anderen Stromrichtung zugeordnet ist;

— eine erste logische Schaltung (CS), die das Verhältnis zwischen aufeinanderfolgenden Halbperioden des Rufsignalstroms auf der Fernsprechleitung mit einem gegebenen Schwellenwert vergleicht, wobei die Halbperioden vom ersten Komparator (CO) als Binärsignale geliefert werden;

— einen ersten Verzögerungsgenerator (GD1), der beim eingangsseitigen Eintreffen eines von der ersten logischen Schaltung (CS) erzeugten Signals ein Signal einer gegebenen Dauer abgibt;

— einen logischen Multiplizierer (P), der an die Ausgänge des Rhythmusgenerators (GR) und des ersten Verzögerungsgenerators (GD1) angeschlossen ist;

— einen Leistungsverstärker (B), der an den Ausgang des logischen Multiplizierers angeschlossen ist und das Relais (C) speist;

— einen zweiten Verzögerungsgenerator (GD2), der beim eingangsseitigen Eintreffen eines vom logischen Multiplizierer (P) gelieferten Schaltung (CS) zu sperren.

5. Fernsprechschaltung nach den Anspruchen 3 und 4, dadurch gekennzeichnet, daß auch der erste Verzögerungsgenerator (GD1), der zweite Verzögerungsgenerator (GD2) und der Rhythmusgenerator (GR) das gemeinsame Taktsignal empfangen.

Fig.1

Fig.2

Fig.3